# EUROPÄISCHE PATENTSCHRIFT

(11) **EP 3 555 714 B1**
(45) Veröffentlichungstag und Bekanntmachung des Hinweises auf die Patenterteilung: **20.07.2022**
(21) Anmeldenummer: 17793925.3
(22) Anmeldetag: 30.10.2017
(51) Int. Cl.: G05B 19/042

(54) **VERFAHREN ZUR APPLIKATIONSSPEZIFISCHEN EINSTELLUNG EINES FELDGERÄTS**
METHOD FOR THE APPLICATION-SPECIFIC SETTING OF A FIELD DEVICE
PROCÉDÉ DE RÉGLAGE, SPÉCIFIQUE À UNE APPLICATION, D'UN APPAREIL DE TERRAIN

(30) Priorität: 13.12.2016 DE 102016124162
(43) Veröffentlichungstag der Anmeldung: 23.10.2019
(73) Patentinhaber: Endress+Hauser Process Solutions AG, 4153 Reinach (CH)
(72) Erfinder: MANEVAL, Michael, 79650 Schopfheim (DE); FINK, Nikolai, 4147 Aesch (CH); FRÖHLICH, Hans Joachim, 4144 Arlesheim (CH); SCHMIDT, Thomas, 4058 Basel (CH)
(74) Vertreter: Andres, Angelika Maria
(86) Internationale Anmeldenummer: PCT/EP2017/077756
(87) Internationale Veröffentlichungsnummer: WO 2018/108376

(56) Entgegenhaltungen:
- DE-A1-102007 026 244

## Beschreibung

Die Erfindung betrifft ein Verfahren zur applikationsspezifischen Einstellung zumindest eines Feldgeräts, das in einer definierten Applikation in einem Prozess der Automatisierungstechnik installiert ist und zumindest eine Prozessvariable eines Mediums bestimmt oder überwacht.

In Automatisierungsanlagen, insbesondere in Prozessautomatisierungsanlagen, werden vielfach Feldgeräte eingesetzt, die zur Bestimmung und/oder Beeinflussung von Prozessvariablen dienen. Zur Bestimmung von Prozessvariablen dienen Sensoren, die beispielsweise in Füllstandsmessgeräte, Durchflussmessgeräte, Druck- und Temperaturmessgeräte, pH-Redoxpotentialmessgeräte, Leitfähigkeitsmessgeräte, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Vielzahl solcher Feldgeräte wird von der Firma Endress + Hauser hergestellt und vertrieben.

In vielen Fällen ist ein Feldgerät über eine Zweidrahtleitung mit einer Auswerte-/Steuereinheit verbunden. Über die Zweidrahtleitung erfolgt die Energieversorgung des Feldgeräts und die die Kommunikation, üblicherweise über das HART Protokoll, mit der Auswerte-/Steuereinheit. In modernen Industrieanlagen sind die Feldgeräte oftmals in Kommunikations-Netzwerke eingebunden. Die Kommunikation zwischen zumindest einer übergeordneten Steuereinheit und den Feldgeräten erfolgt in der Regel über ein Bussystem. Genutzt werden vorrangig die in der Automatisierungstechnik gebräuchlichen Feldbusprotokolle, wie beispielsweise Profibus^{®}, Foundation Fieldbus^{®} oder HART^{®}. Die Kommunikation kann sowohl drahtgebunden als auch drahtlos ausgestaltet sein. Die übergeordnete Steuereinheit dient zur Prozesssteuerung, zur Prozessvisualisierung, zur Prozessüberwachung sowie zur Inbetriebnahme und Bedienung der Feldgeräte und wird auch als Konfigurier-/Managementsystem bezeichnet.

Auch werden Feldgeräte in zunehmendem Maße mit Internetschnittstellen ausgerüstet, über die die Kommunikation und/oder die Energieversorgung erfolgt/erfolgen. Die Bedienung derartiger Feldgeräte erfolgt neben Netzwerkzugängen wie Ethernet bevorzugt auch über ein mobiles Bedientool, das bei Bedarf mit dem Feldgerät Verbindung aufnimmt. Als Kommunikationsprotokoll zwischen der Bedieneinheit und den Feldgeräten kommt beispielsweise Wireless HART oder Bluetooth zum Einsatz.

Ein Feldgerät, das zumindest eine definierte Prozessvariable bestimmt oder überwacht, kann in unterschiedlichen Applikationen eingesetzt werden. So kann z.B. ein Feldgerät zur Füllstandsmessung in unterschiedlichen Prozessen arbeiten, wobei in den Prozessen die Prozess- und/oder Umweltbedingungen erheblich variieren können. So kann es sich beispielsweise bei dem Medium um einen Feststoff, eine Flüssigkeit oder ein Gas handeln. Handelt es sich um eine Flüssigkeit, so kann diese zu Schaumbildung neigen. Sie kann alkalisch oder sauer sein. Es kann ein Rührwerk zur Durchmischung des Mediums vorgesehen sein. Weitere wichtige Prozessbedingungen am Messort sind natürlich die Temperatur, der Druck, die Luftfeuchte, usw. In Abhängigkeit von der jeweiligen Anwendung bzw. Applikation, in der das Feldgerät eingesetzt wird, können diese beispielhaft genannten Einflussgrößen - wie bereits erwähnt - erheblich voneinander abweichen.

Moderne Feldgeräte werden bevorzugt online - also während sie ihre Bestimmungs- und/oder Überwachungsaufgabe wahrnehmen - aber auch offline zumindest in vorgegebenen Zeitintervallen bezüglich ihrer korrekten Funktionalität überwacht. Zu diesem Zweck sind Feldgeräte mit Überwachungsfunktionen ausgestattet, die sie in die Lage versetzen, Selbstdiagnosen am Feldgerät oder Diagnosen des Feldgeräts in Wechselwirkung mit dem Prozess und/oder dem Medium durchzuführen. Die Überwachungsfunktionen beziehen sich sowohl auf die mechanische Integrität als auch die elektrische bzw. elektronische korrekte Funktionalität des Feldgeräts. Weiterhin wird überwacht, ob an der Messstelle - hierdurch wird das Feldgerät in Wechselwirkung mit dem Prozess beschrieben - alles in Ordnung ist oder ob sich Unregelmäßigkeiten zeigen. Eine Unregelmäßigkeit wäre beispielsweise, wenn die Prozess- und/oder Umgebungsbedingungen außerhalb der maximal zulässigen Werte liegen, für die das Feldgerät laut Spezifikation ausgelegt ist.

Aufgrund der Überwachungsmaßnahmen wird jedes Mal, wenn eine Unregelmäßigkeit und/oder eine Diagnose- bzw. Fehlfunktion erkannt oder detektiert wird - also eine Abweichung von einer Vorgabe auftritt -, eine Fehlermeldung generiert. Je nach Art der Diagnose- oder Fehlermeldung kann diese einen Stopp der Automatisierungsanlage auslösen. Ein Ausfall eines Feldgeräts und/oder ein Anlagenstopp kann u.U mit erheblichen Unkosten einhergehen. Oftmals ist es aber so, dass eine Diagnose- und/oder Fehlermeldung, die von dem Feldgerät oder der übergeordneten Steuereinheit generiert wird, in der definierten Applikation, in der das Feldgerät arbeitet, aber durchaus akzeptabel ist. Um dies beurteilen und entscheiden zu können, ist neben der Information über das Funktionieren des Feldgeräts auch detaillierte Information über den Prozess selbst notwendig.

Betrachten wir beispielhaft zwei Fälle, die in der Prozessautomatisierung auftreten:
Bei einem Coriolis Durchflussmessgerät wird ein Fehlalarm ausgelöst, wenn die sog. Nullpunkfluktuation auftritt. Diese ist die Folge von einem pulsierenden Durchfluss. Nun ist die Nullpunktfluktuation aber abhängig von der in dem Prozess bzw. in der Applikation eingesetzten Pumpe. Damit nicht bei Detektion einer beliebigen Nullpunktfluktuation ein Fehlalarm ausgelöst wird, muss die Alarmschwelle in Abhängigkeit von dem verwendeten Pumpentyp eingestellt werden. Diese Einstellung nimmt ein spezialisierter Servicetechniker vor, der den Prozess und die eingesetzten Geräte bzw. Feldgeräte bestens kennt.

Ein vibronischer Grenzstandschalter ist als Überfüllsicherung in einem Behälter installiert. Sobald der vibronische Grenzstandschalter detektiert, dass der maximale Füllstand des Mediums in dem Behälter erreicht ist, wird eine entsprechende Meldung generiert. Der vibronische Sensor hat eine Diagnosefunktion "Achtung Schaum". Die entsprechende Diagnose-/Fehlermeldung wird generiert, sobald der Schaum mit z.B. der schwingfähige Gabel des vibronischen Sensors bis zu einer definierten Eintauchtiefe in Kontakt ist. Es ist die Spezialkenntnis des für die Messstelle zuständigen Servicetechnikers, dass das Medium in dem Prozess stark schäumt, dass aber die Diagnosemeldung "Achtung Schaum" in dieser Applikation unkritisch ist.

Es unterliegt heute also ausschließlich einem spezialisierten Servicetechniker einzuschätzen, ob eine Diagnose-/Fehlermeldung eines Feldgeräts im Falle der jeweiligen Applikation kritisch ist oder ob sie in der jeweiligen Applikation toleriert werden kann. Ist die Diagnose-/Fehlermeldung nach Ansicht des Servicetechnikers unkritisch, wird üblicherweise Abhilfe dadurch geschaffen, dass das Feldgerät oder die übergeordnete Steuerung so eingestellt wird, dass die Diagnose-/Fehlermeldung im Falle der Schaumbildung unterdrückt und nachfolgend nicht mehr generiert wird.

Das Wissen bzw. die gewonnen Erfahrungen, die einen Prozess betreffen, sind somit immer subjektiv und an einzelne Personen gebunden. Probleme treten spätestens dann auf, wenn das Feldgerät nachfolgend in einer anderweitigen Applikation zum Einsatz kommt, bei die Nullpunktfluktuation oder die Schaumbildung durchaus kritisch ist und der Servicetechniker, der die Funktion deaktiviert hatte, die Neuinstallation nicht vornimmt oder die Deaktivierung vergessen hat. Gleiches gilt für den Fall, dass das alte Feldgerät durch ein neues ersetzt wird, das wiederum die ehemals unterdrückte Diagnose-/Fehlermeldung generiert. Als weiterer Nachteil der bekannten Lösung ist zu nennen, dass Änderungen am Feldgerät oder auch an der übergeordneten Steuereinheit zeitaufwändig und dementsprechend kostenintensiv sind.

Die DE 10 2007 026244 A1 offenbart ein Feldgerät, bei welchem nur diejenigen Fehler zur Anzeige gebracht werrden, die für die jeweilige Anwendung des Anwenders relevant sind.

Der Erfindung liegt die Aufgabe zugrunde, die Einstellung des Feldgeräts optimal an die jeweilige Applikation, in der es installiert ist, anzupassen.

Die Aufgabe wird durch ein Verfahren gemäß Anspruch 1 gelöst.

Üblicherweise kommen die Informationen für die applikationsspezifischen Einstellungen von Feldgeräten aus externen Quellen und werden z.B. über Service Techniker bereitgestellt, die die applikationsspezifischen Einstellungen in anderweitigen Anlagen vorgenommen haben. Diese applikationsspezifischen Einstellungen werden nachfolgend allen anderen Feldgeräten, die in vergleichbaren Applikationen installiert werden, zur Verfügung gestellt - mit der Folge, dass die entsprechende Diagnosemeldung, Fehlermeldung oder Information über eine Fehlermeldung bzw. das zugrundeliegende Ereignis nachfolgend ignoriert wird. Die Diagnosemeldung, Fehlermeldung oder Information über eine Fehlermeldung bzw. das zugrundeliegende Ereignis ist quasi nachträglich herausgefiltert worden und wird im Alarmmanagement z.B. der übergeordneten Steuereinheit bzw. des Leitsystems nicht mehr generiert und/oder zur Anzeige gebracht.

Die Vorteile des erfindungsgemäßen Verfahrens sind insbesondere die folgenden:
- Nachträgliche Einstellungsänderungen in der übergeordneten Steuereinheit werden vermieden.
- Applikationsspezifisches Expertenwissen, das insbesondere während der Engineering- oder Bestellphase anfällt und das in Online-Systemen, wie z.B. Cloud Diensten, erfasst wird, kann nachfolgend auch an gleichartigen Messstellen genutzt werden - und zwar über die Grenzen einer Automatisierungsanlage bzw. eines Betriebs hinaus.
- Einsparung von Zeit und Kosten.
- Reduzierte Fehleranfälligkeit bei der Interpretation von Diagnose- oder Fehlerereignissen.
- Reduktion der Alarmflut - und damit eine schnelle und eindeutige Erkennung der für die vorliegende Applikation tatsächlich kritischen Diagnose- und/oder Fehlermeldungen.

Eine vorteilhafte Ausgestaltung des erfindungsgemäßen Verfahrens sieht vor, dass die applikationsspezifische Einstellung des Feldgeräts, die der zumindest einen tolerierbare oder plausiblen Diagnosemeldung, Fehlermeldung und/oder Information über eine Fehlermeldung Abhilfe schafft, im Feldgerät gespeichert wird. Dies erleichtert die Übernahme der optimalen Einstellungs-Informationen bei einem Gerätetausch, wenn das ursprüngliche Feldgerät durch ein neues ersetzt wird.

Alternativ wird vorgeschlagen, dass die applikationsspezifische Einstellung des Feldgeräts, die die zumindest eine tolerierbare und/oder plausible Diagnosemeldung, Fehlermeldung und/oder Information über eine Fehlermeldung unterdrückt, in einem Bediengerät zur Bedienung des Feldgeräts gespeichert wird. Alternativ und oder in Kombination ist vorgesehen, dass die applikationsspezifische Einstellung des Feldgeräts, die der zumindest einen tolerierbaren und/oder plausiblen Diagnosemeldung, Fehlermeldung und/oder Information über eine Fehlermeldung Abhilfe schafft, an eine cloudbasierte Service Plattform übermittelt wird.

Erfindungsgemäß ist vorgesehen, dass die applikationsspezifischen Einstellungen von einer Vielzahl von Feldgeräten in derselben oder einer ähnlichen definierten Applikation - also in vergleichbaren Applikationen - gespeichert werden. Anhand der gespeicherten applikationsspezifischen Einstellungen der Feldgeräte wird eine optimale Einstellung für ein Feldgerät in derselben oder einer ähnlichen Applikation ermittelt. Weiterhin ist vorgesehen, dass die optimale Einstellung für Feldgeräte in derselben oder ähnlichen Applikation bevorzugt über die Service Plattform bereitgestellt wird.

Erfindungsgemäß ist alternativ vorgesehen, dass die optimale Einstellung für Feldgeräte in derselben oder in einer ähnlichen Applikation über statistische Auswertemethoden ermittelt wird.

Bevorzugt wird die optimale Einstellung für Feldgeräte in derselben oder in einer ähnlichen Applikation während einer Inbetriebnahme des Feldgeräts, während einer Service Maßnahme oder während des Betrieb des Feldgeräts zum Zwecke der optimalen Anpassung an die Applikation durchgeführt. Im einfachsten Fall wird aus den vorhandenen Daten die optimale Einstellung über eine Mittelwertbildung ermittelt.

Bevorzugt wird die optimale Einstellung für Feldgeräte in derselben oder ähnlichen Applikation von der Service Plattform direkt an das Feldgerät übermittelt. Ebenso ist es möglich, die Einstellung über ein dazwischengeschaltetes Bedientool (Handy, Laptop, Pad, Spezialtool, usw.) in das Feldgerät zu übertragen. Dies hat den Vorteil, dass nicht jedes Feldgerät mit dem Internet verbindbar sein muss. Die Übertragung kann drahtlos oder drahtgebunden erfolgen. Das Setzen der applikationsspezifischen Änderung im Diagnosefilters des Feldgeräts kann beispielsweise über eine Bedien-Software, z.B. FieldCare der Endress+Hausergruppe, einen DTM (Feldgerätetreiber: Device Type Manager) oder eine DD (Gerätebeschreibung: Device Description erfolgen.

Vorgesehen ist auch, dass über eine ständig vorhandene online Verbindung (FDT Netzwerk-Topology mit Nested Communication) - eine Broadband Verteilung der Einstellung an alle Feldgeräte erfolgt, die in vergleichbaren Applikationen installiert sind.

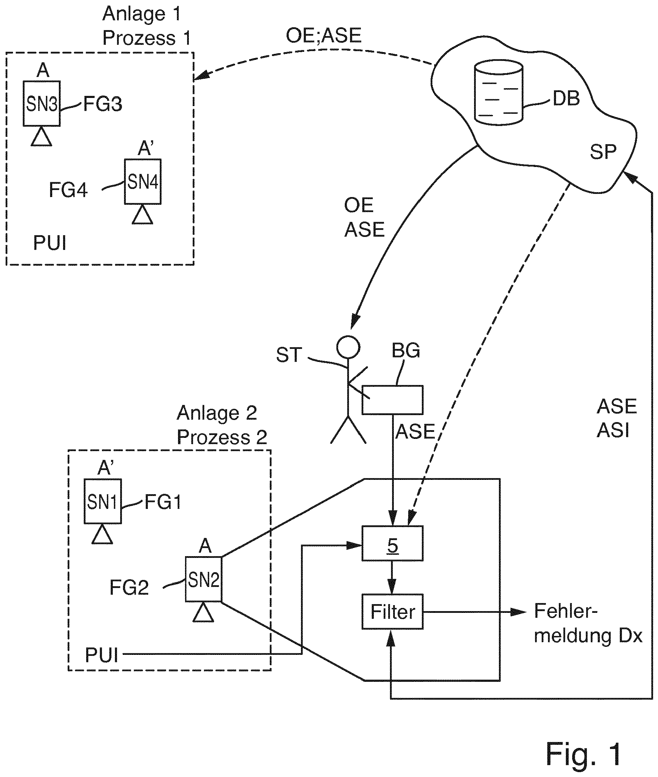

Die Erfindung wird anhand der nachfolgenden Figur Fig. 1 näher erläutert. Fig. 1 zeigt schematisch eine Anordnung, die zur Durchführung des erfindungsgemäßen Verfahrens zur applikationsspezifischen Einstellung ASE eines Feldgeräts FG dient. Beispielsweise erfolgt die applikationsspezifische Einstellung ASE bei oder nach der Inbetriebnahme oder im Rahmen einer Wartung. Dargestellt sind beispielhaft jeweils zwei Feldgeräten FG1, FG2; FG3, FG4, die in definierten Applikationen A; A' in einem Prozess Prozess 1; Prozess 2 in Anlagen Anlage 1; Anlage 2 der Automatisierungstechnik installiert sind. Im gezeigten Fall überwachen die Feldgeräte FG1, FG2, FG3, FG4 mit den entsprechenden Seriennummern SN1, SN2, SN3, SN4 den Füllstand eines Medium in einem Behälter. Behälter und Medium sind nicht dargestellt. Es versteht sich von selbst, dass der Füllstand als zu bestimmende oder zu überwachende Prozessvariable nur beispielhaft genannt ist. In der Beschreibungseinleitung sind weitere zu bestimmende oder zu überwachende Prozessvariablen - gleichfalls beispielhaft - genannt.

Das erfindungsgemäße Verfahren wird an dem Feldgerät FG2 mit der Seriennummer SN2 verdeutlicht. Diagnosemeldungen, Fehlermeldungen oder Informationen über eine Fehlermeldung D, die an dem Feldgeräten FG2 auftreten, werden z.B. in dem Speicher S aufgezeichnet. Üblicherweise wird diese Aufzeichnung über ein definiertes Zeitintervall vorgenommen. Dieses Zeitintervall kann wenige Sekunden, Minuten oder Stunden oder auch die Zeitdauer zwischen zwei standardmäßig durchzuführenden Service-Untersuchungen betragen. Während des Zeitintervalls können die Diagnosemeldungen, Fehlermeldungen und/oder Informationen über die Fehlermeldungen D kontinuierlich oder auch nur temporär auftreten bzw. aufgetreten sein.

Das Feldgerät FG2 mit der Seriennummer SN2 ist in einer definierten Applikation A eingesetzt. Die Applikation A wird durch vorgegebene oder gemessene applikationsspezifische Prozess- und Umgebungs-Informationen ASI charakterisiert. Die applikationsspezifische Prozess- und Umgebungs-Informationen ASI werden bevorzugt während der Engineering Phase und/oder der Bestellphase des Feldgeräts FG2 zusammengetragen, können jedoch auch zu einem späteren Zeitpunkt während des Betriebs des Feldgeräts FG2 oder während einer Wartung des Feldgeräts FG2 ergänzt werden. Bei den Umgebungs-Informationen PUI handelt es sich insbesondere um die Temperatur, den Druck, die Luftfeuchte, usw. Diese werden entweder gemessen oder sind in dem Prozess Prozess 1 vorgegeben. Die Prozess-Informationen betreffen insbesondere die Eigenschaften des zu bestimmenden oder zu überwachenden Mediums oder den Behälter, in dem sich das Medium befindet. Diese Informationen werden übeispielsweise von dem Servicetechniker ST geliefert.

Nachfolgend wird bevorzugt auf der Basis aller zur Verfügung stehenden applikationsspezifischen Informationen ASI analysiert, welche Diagnosemeldung(en)e, Fehlermeldung(en) und/oder Informationen über die Fehlermeldung(en) D in der definierten Applikation A tolerierbar und/oder plausibel ist (sind). Es wird also jede Diagnosemeldung, Fehlermeldung und/oder Informationen über die Fehlermeldung D der Applikation A mit Expertenwissen versehen. Das Expertenwissen bzw. die applikationsspezifische Information ASI kommt entweder von dem Service Techniker ST, oder es wird aus einer Datenbank DB z.B. der Service Plattform SP zur Verfügung gestellt. Diese applikationsspezifischen Information ASI sind jeder Diagnosemeldung, Fehlermeldung und/oder Informationen über die Fehlermeldung D des Feldgeräts FG zugeordnet. Hierdurch wird kennzeichnet, ob eine Diagnosemeldung, Fehlermeldung und/oder Informationen über die Fehlermeldung D in der definierten Applikation A toleriert werden kann, oder ob es sich um eine Fehlermeldung Dx handelt, die Wartungsmaßnahmen nach sich ziehen muss. Jede Diagnosemeldung, Fehlermeldung und/oder Information über eine Fehlermeldung D, die in der definierten Applikation A als tolerierbar und/oder plausibel eingestuft wird, wird nachfolgend in der applikationsspezifischen Einstellung ASE des Feldgeräts FG ausgeblendet bzw. herausgefiltert. Anschließend wir das Feldgerät FG mit der applikationsspezifischen Einstellung ASE, die die zumindest eine als tolerierbar und/oder plausibel eingestufte Diagnosemeldung, Fehlermeldung und/oder Information Abhilfe D ausblendet, betrieben. Eine aufwändige Änderung in dem Fehlermanagement der übergeordneten Steuereinheit oder der Leitwarte ist nicht erforderlich.

Die applikationsspezifische Einstellung ASE des Feldgeräts FG wird im Feldgerät FG2 oder in dem Bediengerät BG gespeichert. Beispiele für die Ausgestaltung des Bediengeräts BG sind bereits zuvor beschrieben. Ist das Feldgerät FG Teil eines Kommunikationsnetzwerks kann die applikationsspezifische Einstellung ASE des Feldgeräts FG auch in einem weiteren Teilnehmer des Kommunikationsnetzwerks, sei es z.B. ein Feldgerät, ein Gateway oder ein Funkadapter, gespeichert werden.

Alternativ oder additiv wird die applikationsspezifische Einstellung ASE, die die plausible und/oder tolerierbare Diagnosemeldung, Fehlermeldung und/oder Information über eine Fehlermeldung D ausblendet, an eine cloudbasierte Service Plattform SP übermittelt. Der Vorteil der zu letztgenannten Variante ist darin zu sehen, dass die applikationsspezifische Einstellung ASE nun - jederzeit und überall auch Feldgeräten FG zur Verfügung steht, die in anderen Anlagen - hier Anlage 1 - mit gleichen oder vergleichbaren Applikationen A, A' installiert sind.

Bei der cloudbasierten Lösung ergibt sich auch der Vorteil, dass an einer definierten Stelle (zentral oder dezentral) applikationsspezifische Einstellungen ASE von einer Vielzahl von Feldgeräten FG in derselben oder einer ähnlichen definierten Applikation A, A' verfügbar sind. Anhand der gespeicherten applikationsspezifischen Einstellungen ASE der Feldgeräte FG lässt sich eine optimale Einstellung OE für Feldgerät FG in gleichen oder ähnlichen Applikation A, A' ermitteln. Unter ähnlicher Applikation A' wird eine Applikation verstanden, die mit einer definierten Applikation A innerhalb vorgegebener Toleranzgrenzen im Hinblick auf die einzelnen applikationsspezifischen Informationen ASI übereinstimmt.

Die optimale Einstellung oE für Feldgeräte FG in derselben oder der ähnlichen definierten Applikation A, A' wird bevorzugt über statistische Auswertemethoden ermittelt. Hierdurch lassen sich die Toleranzgrenzen der applikationsspezifischen Informationen ASI bzw. die applikationsspezifischen Einstellungen ASE minimieren und kontinuierlich verbessern, da nachfolgend konfigurierte Feldgeräte FG aufgrund der anwachsenden zur Verfügung stehenden applikationsspezifischen Informationen ASI mit stetig sich verbessernden applikationsspezifischen Einstellungen ASE konfiguriert werden können.

## Patentansprüche

1. Verfahren zur applikationsspezifischen Einstellung eines Feldgeräts (FG), das in einer definierten Applikation (A) in einem Prozess der Automatisierungstechnik installiert ist und zumindest eine Prozessvariable eines Mediums bestimmt oder überwacht, wobei das Verfahren die folgenden Verfahrensschritte aufweist:
- Aufzeichnen von zumindest einer Diagnosemeldung, Fehlermeldung oder Information über eine Fehlermeldung (D), die an dem Feldgerät (FG) zumindest während eines definierten Zeitintervalls zumindest temporär auftritt oder aufgetreten ist,
- Analysieren, welche der zumindest einen Diagnosemeldung, Fehlermeldung und/oder Information über die Fehlermeldung (D) in der definierten Applikation (A) tolerierbar sind,
- Zuordnen einer applikationsspezifischen Information (TP) hinsichtlich der Tolerierbarkeit zu jeder in der definierten Applikation (A) aufgetretenen Diagnosemeldung, Fehlermeldung und/oder Information über eine Fehlermeldung (D),
- Unterdrücken der zumindest einen Diagnosemeldung, Fehlermeldung und/oder Information über eine Fehlermeldung (D), wenn diese in der definierten Applikation (A) als tolerierbar eingestuft wird,
- Speichern der applikationsspezifischen Einstellungen (ASE), die die zumindest eine als tolerierbar eingestufte Diagnosemeldung, Fehlermeldung und/oder Information über die Fehlermeldung (D) unterdrückt, von einer Vielzahl von Feldgeräten (FG) in derselben oder einer ähnlich definierten Applikation (A, A'), wobei die ähnliche definierte Applikation (A') mit der definierten Applikation (A) innerhalb vorgegebener Toleranzgrenzen hinsichtlich applikationsspezifischer Informationen (ASI) übereinstimmt,
- Ermitteln einer optimalen Einstellung (OE) für ein Feldgerät (FG) in der gleichen oder einer ähnlichen Applikation (A, A') anhand der gespeicherten applikationsspezifischen Einstellungen (ASE) der Feldgeräte (FG) oder anhand statistischer Auswertemethoden.

2. Verfahren nach Anspruch 1,
wobei die applikationsspezifische Einstellung (ASE) des Feldgeräts (FG), die die zumindest eine tolerierbare Diagnosemeldung, Fehlermeldung und/oder Information über eine Fehlermeldung (D) ausblendet, im Feldgerät gespeichert wird.

3. Verfahren nach Anspruch 1,
wobei die applikationsspezifische Einstellung (ASE) des Feldgeräts (FG), die die zumindest eine tolerierbare Diagnosemeldung, Fehlermeldung und/oder Information über eine Fehlermeldung (D) ausblendet, in einem Bediengerät (BG) zur Bedienung des Feldgeräts (FG) gespeichert wird.

4. Verfahren nach Anspruch 1,
wobei die applikationsspezifischen Einstellung (ASE) des Feldgeräts (FG), die die zumindest eine tolerierbare Diagnosemeldung, Fehlermeldung und/oder Information über eine Fehlermeldung (D) ausblendet, an eine cloudbasierte Service Plattform (SP) übermittelt wird.

5. Verfahren nach zumindest einem der vorhergehenden Ansprüche,
wobei die optimale Einstellung (OE) für Feldgeräte (FG) in der gleichen oder der ähnlichen definierten Applikation (A) bevorzugt über eine Service Plattform (SP) bereitgestellt wird.

6. Verfahren nach zumindest einem der vorhergehenden Ansprüche,
wobei die optimale Einstellung (OE) für Feldgeräte (FG) in derselben oder der ähnlichen definierten Applikation (A, A') während einer Inbetriebnahme des Feldgeräts (FG), während einer Service Maßnahme oder während des Betrieb des Feldgeräts (FG) zum Zwecke der optimalen Anpassung an die definierte Applikation (A) durchgeführt wird.

7. Verfahren nach zumindest einem der vorhergehenden Ansprüche,
wobei die optimale Einstellung (OE) für Feldgeräte (FG) in derselben oder der ähnlichen definierten Applikation (A, A') von einer Service Plattform (SP) direkt an das Feldgerät (FG) übermittelt wird.

## Claims

1. Procedure for the application-specific configuration of a field device (FG) which is installed in a defined application (A) in an automation engineering process and which determines or monitors at least one process variable of a medium, wherein said procedure comprises the following procedural steps:
- Recording of at least one diagnostic message, error message or item of information about an error message (D) which occurs or has occurred at least temporarily at the field device (FG) at least during a defined time interval,
- Analysis to determine which of the at least one diagnostic message, error message and/or item of information about the error message (D) are tolerable in the defined application (A),
- Assignment of application-specific information (TP) regarding tolerability to each diagnostic message, error message and/or item of information about an error message (D) occurring in the defined application (A),
- Suppression of the at least one diagnostic message, error message and/or item of information about an error message (D) if this is classed as tolerable in the defined application (A),
- Saving of the application-specific settings (ASE) that suppress the at least one diagnostic message, error message and/or item of information about the error message (D) classed as tolerable, by several field devices (FG) in the same application or a similarly defined application (A, A'), wherein the similarly defined application (A') matches the defined application (A) within predefined tolerance limits concerning application-specific information (ASI),
- Determination of an optimum setting (OE) for a field device (FG) in the same or a similar application (A, A') using the saved application-specific settings (ASE) of the field devices (FG) or using statistical evaluation methods.

2. Procedure as claimed in Claim 1,
wherein the application-specific setting (ASE) of the field device (FG), which masks out the at least one tolerable diagnostic message, error message and/or item of information about an error message (D), is saved in the field device.

3. Procedure as claimed in Claim 1,
wherein the application-specific setting (ASE) of the field device (FG), which masks out the at least one tolerable diagnostic message, error message and/or item of information about an error message (D), is saved in an operating device (BG) for the operation of the field device (FG).

4. Procedure as claimed in Claim 1,
wherein the application-specific setting (ASE) of the field device (FG), which masks out the at least one tolerable diagnostic message, error message and/or item of information about an error message (D), is transmitted to a cloud-based service platform (SP).

5. Procedure as claimed in at least one of the previous claims,
wherein the optimum setting (OE) for field devices (FG) in the same or similarly defined application (A) is preferably provided via a service platform (SP).

6. Procedure as claimed in at least one of the previous claims,
wherein the optimum setting (OE) for field devices (FG) is implemented in the same application or in the similarly defined application (A, A') during the commissioning of the field device (FG), during a service measure or during the operation of the field device (FG) for the purpose of optimally adjusting to the defined application (A).

7. Procedure as claimed in at least one of the previous claims,
wherein the optimum setting (OE) for field devices (FG) in the same application or in a similarly defined application (A, A') is transmitted by a service platform (SP) directly to the field device (FG).

## Revendications

1. Procédé destiné au réglage spécifique à une application d'un appareil de terrain (FG) qui est installé dans une application définie (A) dans un process de la technique d'automatisation et qui détermine ou surveille au moins une variable de process d'un produit, lequel procédé comprend les étapes de procédé suivantes :
- Enregistrement d'au moins un message de diagnostic, message d'erreur ou information sur un message d'erreur (D) qui apparaît ou est apparu sur l'appareil de terrain (FG) au moins temporairement pendant un intervalle de temps défini,
- Analyse visant à déterminer lesquels de l'au moins un message de diagnostic, message d'erreur et/ou information sur le message d'erreur (D) sont tolérables dans l'application définie (A),
- Affectation d'une information (TP) spécifique à l'application en ce qui concerne la tolérabilité à chaque message de diagnostic, message d'erreur et/ou information sur un message d'erreur (D) apparu dans l'application définie (A),
- Suppression de l'au moins un message de diagnostic, message d'erreur et/ou information sur un message d'erreur (D) si celui-ci est classé comme tolérable dans l'application définie (A),
- Mémorisation des réglages spécifiques à l'application (ASE), qui suppriment l'au moins un message de diagnostic, message d'erreur et/ou information sur le message d'erreur (D) classé comme tolérable, d'une pluralité d'appareils de terrain (FG) dans la même application ou dans une application définie de manière similaire (A, A'), l'application définie de manière similaire (A') coïncidant avec l'application définie (A) à l'intérieur de limites de tolérance prédéfinies en ce qui concerne des informations spécifiques à l'application (ASI),
- Détermination d'un réglage optimal (OE) pour un appareil de terrain (FG) dans la même application ou une application similaire (A, A') à l'aide des réglages spécifiques à l'application (ASE) mémorisés des appareils de terrain (FG) ou à l'aide de méthodes d'évaluation statistiques.

2. Procédé selon la revendication 1,
pour lequel le réglage (ASE) spécifique à l'application de l'appareil de terrain (FG), qui masque l'au moins un message de diagnostic, message d'erreur et/ou information sur un message d'erreur (D) tolérable, est enregistré dans l'appareil de terrain.

3. Procédé selon la revendication 1,
pour lequel le réglage (ASE) spécifique à l'application de l'appareil de terrain (FG), qui masque l'au moins un message de diagnostic, message d'erreur et/ou information sur un message d'erreur (D) tolérable, est enregistré dans un appareil de commande (BG) pour la commande de l'appareil de terrain (FG).

4. Procédé selon la revendication 1,
pour lequel le réglage spécifique à l'application (ASE) de l'appareil de terrain (FG), qui masque l'au moins un message de diagnostic, message d'erreur et/ou information sur un message d'erreur (D) tolérable, est transmis à une plate-forme de service (SP) basée sur le cloud.

5. Procédé selon au moins l'une des revendications précédentes,
pour lequel le réglage optimal (OE) pour des appareils de terrain (FG) dans la même application définie ou dans l'application définie de manière similaire (A) est mis à disposition de préférence par l'intermédiaire d'une plate-forme de service (SP).

6. Procédé selon au moins l'une des revendications précédentes,
pour lequel le réglage optimal (OE) pour des appareils de terrain (FG) est effectué dans la même application ou dans l'application définie similaire (A, A') pendant une mise en service de l'appareil de terrain (FG), pendant une intervention de service ou pendant le fonctionnement de l'appareil de terrain (FG) dans le but d'une adaptation optimale à l'application définie (A).

7. Procédé selon au moins l'une des revendications précédentes,
pour lequel le réglage optimal (OE) pour des appareils de terrain (FG) dans la même application définie ou dans l'application définie de manière similaire (A, A') est transmis par une plate-forme de service (SP) directement à l'appareil de terrain (FG).
